# EUROPEAN PATENT SPECIFICATION

(11) **EP 4 063 195 B1**
(45) Date of publication and mention of the grant of the patent: **20.03.2024**
(21) Application number: 22157805.7
(22) Date of filing: 21.02.2022
(51) Int. Cl.: B60R 9/00

(54) **A STORAGE SYSTEM SUITABLE FOR INSTALLATION IN OR ON A VEHICLE**
SPEICHERSYSTEM ZUM EINBAU IN ODER AN EINEM FAHRZEUG
SYSTÈME DE STOCKAGE APPROPRIÉ POUR ÊTRE INSTALLÉ DANS OU SUR UN VÉHICULE

(30) Priority: 22.02.2021 AU 2021900456
(43) Date of publication of application: 28.09.2022
(73) Proprietor: Impact Import Group Pty Ltd, Leopold, Victoria 3224 (AU)
(72) Inventor: MATTHEWS, Giles Frederick, BALWYN, 3103 (AU); STOLFO, Antony Angelo, INDENTED HEAD, 3223 (AU); YUAN, Yi, RESERVOIR, 3073 (AU); WEST, Jeffrey, DIAMOND CREEK, 3089 (AU); CHAPMAN, David Richard, THORNBURY, 3071 (AU); FULLER, Blake Jordan, GLEN IRIS, 3146 (AU); MILLS, Louis David, ST KILDA, 3182 (AU)
(74) Representative: J A Kemp LLP

(56) References cited:
- US-A- 4 274 568
- US-A1- 2002 014 505
- US-A1- 2006 284 437

## Description

### Technical Field

The present invention relates to a storage system. The invention is particularly adapted for installation in the rear cargo space or luggage compartment (hereinafter collectively referred to as a "cargo space") of a 4WD, SUV, recreation vehicle, commercial vehicle and freight vehicle and will hereinafter be generally described in this context. The invention may also be utilised in towed vehicles such as trailers and caravans.

The applicant also envisages that the storage system may be adapted for use in other applications, including in buildings and other structures.

### Background of Invention

In the cramped confines of a vehicle cargo space, recreational, camping, work, trade, luggage and other equipment is often haphazardly arranged and awkward to access when required.

Some vehicle owners and/or users choose to retro-fit some type of storage arrangement within their vehicle cargo space. These arrangements come in a variety of forms, in part dependent on the specific requirements of the vehicle owner/user. Some existing arrangements are commercially available, while others are custom built by or for the vehicle owner/user.

Existing arrangements may include one or a combination of features including shelves, drawers and containers, as well as ancillary fittings to enable installation of portable fridges, and other equipment.

The reasons for installing a storage arrangement within a vehicle cargo space can be varied. For some, the desire to better and more orderly organise the cargo space contents is for improved safety, with the aim of preventing objects from moving about the vehicle when in motion. For others, an improved volume efficiency of the cargo space contents and being better able to access the cargo space without unpacking is desirable. For many, the installation of a storage arrangement is for a combination of these reasons.

Existing storage arrangements are usually fabricated from timber, sheet metal or aluminium. Where such arrangements include drawers, the drawer construction is usually a two-part construction, with an outer frame and inner drawer. The drawers are installed in the vehicle by bolting the outer frame to the sheet metal body of the vehicle. This usually requires the installer to reach underneath the vehicle, which can be undesirably time consuming and potentially dangerous.

Another potential limitation of existing cargo space storage arrangements is this they are not easily adaptable or reconfigurable to meet the changing requirements of the user. For example, existing arrangements are generally impractical for a tradesman using their vehicle for work, who then want to go camping and/or fishing for the weekend. The storage arrangement installed in the vehicle for the tradesman's work equipment may not be suitable or practical for accommodating camping/fishing and other equipment.

Moreover, existing storage arrangement installations make it impractical to remove (or reconfigure) the storage arrangement containing a tradesman's work equipment and temporarily replace it with a storage arrangement containing camping/fishing equipment.

Finally, another potential limitation of existing storage arrangements is that they generally can't be transferred from one vehicle to another, such as may be desired if the owner/user wishes to upgrade or change their current vehicle. Consequently, a new storage arrangement must be installed in the new vehicle.

It would be desirable to provide a storage solution that at least partially addresses on or more of the above referred limitations of existing storage arrangements.

US4,274,568A provides one conventional storage arrangement for a carrying vehicle luggage on top of the rear boot lid or roof of a vehicle. In US4,274,568A there is disclosed a mounting arrangement utilising one or a pair of rails. The present applicant is of the view that the arrangement disclosed in US4,274,568A is unnecessarily time consuming for the user when securing luggage thereto or removing luggage therefrom and so may be improved upon.

### Summary of Invention

According to a first broad aspect of the present invention, there is provided a storage system. The storage system includes a pair of rails, including a first rail and a second rail, and rail mounts for mounting the first and second rails in an at least generally parallel orientation in position on or to a supporting surface. The storage system includes a storage frame defining a storage space for storing items therein, a first connector for connecting the storage frame to the first rail, and a second connector for connecting the storage frame to the second rail. The first connector includes a first connector rail part and a first connector frame part, with the first connector rail part provided on the first rail, and the first connector frame part provided on the storage frame. One of the first connector rail part and the first connector frame part is slidably receivable in the other of the first connector rail part and the first connector frame part.

In one preferred embodiment, the second connector includes a second connector rail part and a second connector frame part, with the second connector rail part provided on the second rail and the second connector frame part provided on the storage frame. In such an arrangement, preferably, one of the second connector rail part and second connector frame part is receivable by the other of the second connector rail part and second connector frame part in a pin latch, catch or locking pin engagement. The engagement is preferably configured to avoid inadvertent disengagement of the second connector frame part from the second connector rail part.

The provision of a slidably receivable arrangement between the first connector rail part and first connector frame part is considered by the applicant to be unique. Likewise, the provision of a pin latch, catch or locking pin engagement between the second connector rail part and the second connector frame part is considered by the applicant to be unique. With these arrangements, once the rails are mounted in a desired position on or to a supporting surface, the storage frame can be quickly and simply lifted and/or slid, and then secured in position to the rails. The applicant's invention obviates the step of having to first place the storage frame into a desired position relative to a supporting surface and then having to manually connect the storage frame in position using screw threaded (or other) fasteners. Instead, a significant benefit of the applicant's invention is that the storage frame is secured in position on or to the rails simply by placing the storage frame in the correct position on the rails for the first and second connectors to secure the storage frame in position.

Another aspect of the present invention considered unique by the applicant is the provision of the first and second rails, and the use of mounts to mount each rail in a desired position. The rails can be utilized with a potentially wide variety of mounts and mounting locations. This allows for the storage system to be installed in a wide variety of applications, particularly (but not limited to) on the rear tray of 4WDs, SUVs, and other recreation, commercial and freight vehicles. Moreover, the applicant's system allows for the mounts to be mounted to the rails at any one of a range of different rail positions, thereby catering for differing size and dimension requirements of different model vehicles. It also provides the potential for mounting the mounts to existing vehicle mounting points, thereby avoiding the need to drill new mounting holes or otherwise modify the vehicle to install the storage system.

According to the invention, one of the first connector rail part and first connector frame part is slidably receivable in the other of the first connector rail part and first connector frame part in a first installation direction, with the first installation direction being at least generally transverse to the orientation of the first and second rails. According to the invention, one of the second connector rail part and second connector frame part is receivable in the other of the second connector rail part and second connector frame part in a second installation direction, with the second installation direction being at least generally transverse to the orientation of the first and second rails; and with the first installation direction being generally transverse to the second installation direction. Other installation directions are also envisaged, in addition to those referred to above.

In a preferred form of the present invention, there is provided a pair of first connectors and a pair of second connectors. In this way, a first connector and second connector may be provided at, adjacent or proximate each lateral side of the storage frame, thereby enhancing connection between the storage frame and the rails and creating a stable and robust connection arrangement.

In a preferred form, each of the first and second connectors is a releasable connector, thereby allowing for removal of the storage frame from the rails if required. Similarly, each of the mounts is preferably releasably mounted to a respective rail, thereby desirably allowing for adjustment or removal of the mounts from the rails as required.

The position of the first connector(s) on the first rail may be laterally off-set from the position of the second connector(s) on the second rail, as this may assist in installation of the storage frame onto the rails.

The rail mounts have been designed particularly, but not exclusively, for mounting the rails in the rear luggage compartment of a 4WD, SUV, recreation vehicle, commercial vehicle (such as a van) and freight vehicle. The rail mounts are secured to a suitable supporting surface (such as the cargo space floor or sidewalls) by screw-threaded fasteners, although it is to be appreciated that other suitable fasteners may also be used. Each rail mount may be provided in a form suitable for a specific installation. Each rail mount may be in the form of, or include, a mounting bracket or any other suitable form.

In such an embodiment, the mounts are preferably mounted in position on/to the vehicle such that each of the first and second rails extends in an at least generally transverse direction across the vehicle. This orientation is contemplated when access to the vehicle's cargo space is through a rear opening of the vehicle via a rear tailgate or door(s). If, for example, access to the cargo space was from a side of the vehicle then it may be appropriate to secure the mounts in position to the vehicle such that the rails extend at least generally forwardly and rearwardly of the vehicle.

The storage system has been designed such that each mount may be secured to a respective first and/or second rail (such as by clamping) at any one of a plurality of potential mounting points along the respective rail. This is a desirable feature, as it provides a degree of flexibility at the installation stage so that the mounts can be correctly positioned at suitable mounting locations within the vehicle (or other structure).

It is envisaged that, in one simplified form, the storage frame includes (at least) a bottom wall. However, in other preferred forms, the storage frame further includes opposing side walls, a rear wall, and a front or top opening, which collectively define the storage space. A drawer or container may be receivable in the storage space through the front or top opening.

The storage system may be adapted to include a second storage frame (or indeed, a plurality of additional storage frames) for mounting to each of the first and second rails. In this way, the storage system may be further configured to meet the specific needs and requirements of an end user.

In a further embodiment, the rail mounts may be configured to mount the rails to a top (or other suitable) wall of a storage frame of an adjacent storage system. In this way, it is possible to mount one storage frame on top of another storage frame, thereby potentially utilizing more of a vehicle's cargo space.

In further embodiments, the storage system may be secured to any practical (at least generally) vertical or horizontal surface, or sloping supporting surface, thereby potentially broadening the possible uses of the system. Thus, although the storage system has primarily been designed in the context to mounting on an at least substantially horizontal surface in a vehicle cargo space, the applicant also envisages mounting the system to at least generally vertical, horizontal and sloping surfaces, including both vehicle and non-vehicle applications.

In yet further embodiments, the storage frame may be replaced with or reconfigured to receive a range of other possible items, including any one or more of a toolbox, container, shelf, fridge, mechanical tools and equipment, and electrical tools and equipment. Thus, according to an example not forming part of the present invention, there is provided a storage system. The storage system includes a pair of rails, including a first rail and a second rail, and rail mounts for mounting the first and second rails in an at least generally parallel orientation in position on or to a supporting surface. The storage system includes a first connector for connecting an ancillary device to the first rail, and a second connector for connecting the ancillary device to the second rail. The first connector includes a first connector rail part and a first ancillary device connector part, with the first connector rail part provided on the first rail, and the first ancillary device connector part adapted for mounting to the ancillary device.

One of the first connector rail part and the first ancillary device connector part may be slidably receivable in the other of the first connector rail part and the first ancillary device connector part.

In the above referred example not forming part of the invention, the second connector may include a second connector rail part and a second ancillary device connector part, with the second connector rail part provided on the second rail and the second ancillary device connector part adapted for mounting to the ancillary device. In such an arrangement, preferably, one of the second connector rail part and second ancillary device connector part is receivable by the other of the second connector rail part and second ancillary device connector part in a pin latch, catch or locking pin engagement.

It is envisaged that, during installation of the storage system, the mounts would typically be mounted to the vehicle (or other suitable structure) by mounting fasteners, such as screw threaded fasteners. However, the applicant also envisages other suitable arrangements for mounting the mounts in position to the vehicle/structure. These include releasable/removable mounting arrangements and permanent mounting arrangements.

It is to be appreciated that the mounts need not be directly mounted to the supporting surface. They may be mounted to some other suitable structure to retain them in the intended position on the supporting surface.

The present invention not only provides what the applicant considers to be a unique storage system, it also provides a unique and simplified method of installation when compared to existing storage systems, particularly vehicular storage systems. In this regard, and according to a broad aspect of the present invention, there is provided a method of installing a storage system of the type generally described above. The installation method according to the invention includes mounting the mounts in position on a supporting surface, securing the first and second rails to the mounts, then moving the storage frame in a first installation direction relative to the first and second rails such that the first connector rail part or the first connector frame part is slidably received in the other of the first connector rail part and the first connector frame part.

Preferably, the method then includes the step of moving the storage frame relative to the first and second rails in a second installation direction, such that one of the second connector rail part and the second connector frame part are received by the other of the second connector rail part and the second connector frame part in a pin latch, catch or locking pin engagement.

A similar installation method exists if, instead of a storage frame, the system is used in conjunction with an ancillary device of the type previously referred to.

### Brief Description of Drawings

It will be convenient to hereinafter describe embodiments of the invention with reference to the accompanying drawings. The particularity of the drawings is to be understood as not limiting the preceding broad description of the invention.
Figure 1 is an isometric view of a storage system according to one aspect of the present invention, and with an associated drawer in a partially open position.
Figure 2 is a side view of the storage system shown in Fig. 1.
Figure 3 is an isometric view of the storage system of Fig. 1 in a partially installed state, and with the drawer fully closed.
Figure 4 is an isometric view of the storage system of Fig. 3, but in a further advanced installation stage.
Figure 5 is an isometric view of the storage system of Fig. 4, but in a yet further advanced installation stage.
Figure 6 is a side view of the storage system in the installation stage shown in Fig. 4.
Figure 6a is a magnified view of a lower right-hand portion of Figure 6.
Figure 7 is a bottom view of the storage system in the installation stage shown in Fig. 4.
Figure 8 is a bottom view of the storage system of Fig. 1, but with the associated drawer shown in a fully closed position.
Figure 8a is a magnified view of a lower left-hand portion of Figure 8; and showing a retaining latch in a latched position.
Figure 9 is a bottom view of the storage system, as shown in the partially installed stage of Fig. 5.
Figure 9a is a magnified view of a lower left-hand portion of Figure 9; and showing the retaining latch in an un-latched position.
Figure 10 is an exploded isometric view of a first, upper storage system mounted on top of a second, lower storage system according to another embodiment of the present invention. The first and second rails of the second, lower storage system have not been shown.
Figure 11 is a side view of the first and second storage systems shown in Fig. 10 when in an assembled state. The first and second rails of the second, lower storage system absent from Fig. 10 are shown in Fig. 11.
Figure 12 is a front view of three separate storage systems when assembled together according to a yet further embodiment of the present invention.
Figure 13 is an isometric view of another embodiment of the storage system of the present invention, but with the storage frame (or equivalent) removed.
Figure 14 is an isometric rear view of another storage system of the present invention when fitted in the rear cargo space of a vehicle, but with the storage frame (or equivalent) not shown.
Figure 15 is a plan view of another storage system of the present invention when fitted in the rear cargo space of another vehicle, but with the storage frame (or equivalent) not shown.
Figure 16 is an isometric rear view of the arrangement shown in Figure 15.
Figure 17 is a magnified upper isometric view of a first and second connector of the storage system shown in Figure 1.
Figure 18 is a magnified upper isometric view of an alternative connector that may be used in place of the first and/or second connectors shown in Figure 17.
Figure 19 is a magnified upper isometric view of an alternative connector that may be used in place of the first and/or second connectors shown in Figure 17.
Figure 20 is an upper isometric view of a possible rail and connector configuration according to another embodiment of the present invention.

### Detailed Description

The illustrated embodiments are shown generally in the context of storage systems being fitted within the cargo space of a 4WD, SUV, recreation vehicle, commercial vehicle or freight vehicle and so will be described in this context. However, the reader is to understand that the illustrated embodiments may be utilized or adapted for use in other applications.

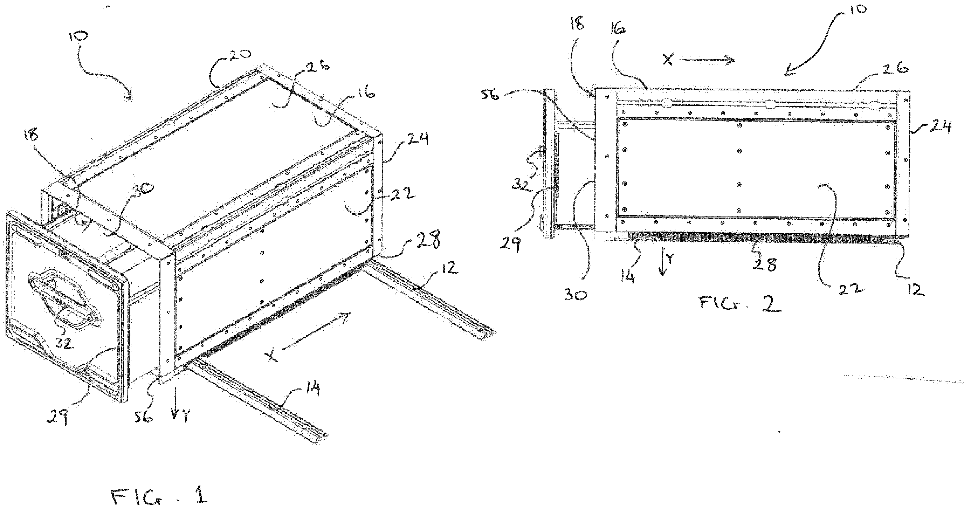

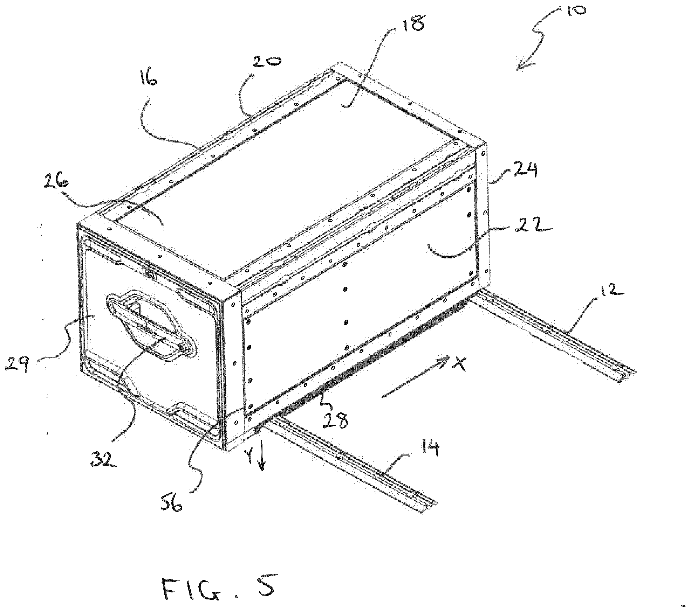

Referring to the Figures 1 to 9a, there is illustrated a storage system 10. The storage system 10 includes a pair of aluminium rails, including a first rail 12 and a second rail 14, and rail mounts (not clearly shown) for mounting the first and second rails 12, 14 in an at least generally parallel orientation in position on or to the cargo space floor of a vehicle.

In a typical vehicular application, with a rear opening to the vehicle's cargo space, the rails 12, 14 would be mounted in an at least generally transverse direction across the cargo space. However, the cargo space may have an access opening on a side of the vehicle (as opposed to being at the rear of the vehicle), in which case the rails 12, 14 may be mounted within the cargo space such that they extend at least generally forwardly and rearwardly within the cargo space.

The rails 12, 14 may be of any practical length, although the lengths required will be determined, at least in part, by the width of the vehicle cargo space concerned, and the size of the storage frame 16 (or multiple storage frames and/or ancillary devices) to be received within the cargo space.

The precise mounting location of each rail 12, 14 will be determined by a number of factors, including the location of any existing mounting points within the cargo space of the vehicle concerned. The spacing between the rails 12, 14 will, at least in part, be dictated by the depth of the frame(s) 16 to be accommodated. The vehicle cargo space front wall and tailgate positions must also be factored in to ensure that the storage frame(s) 16 will be accommodated within the cargo space with suitable clearances. Clearance must exist between the tailgate (or door(s), hatch or boot cover) and the storage frame 16 with the tailgate in the closed position and in the open position.

The rail mounts may, in one simplified form, be in the form of screw threaded (or other) fasteners extending through the rails 12, 14 and mounted in position on or to the cargo space floor or chassis of the vehicle. Existing mounting points provided in the vehicle may be utilized for securing the mounts in position, thereby avoiding the need to modify the vehicle prior to installing the storage system 10. In another form, each mount may include a mount body mounted to or in position on a supporting surface (such as by screw threaded fasteners), with the rails 12, 14 then clamped or otherwise fastened to the mount bodies. The configuration of the mounts may depend, at least in part, on the intended installation location of the storage system 10, and the type and model of vehicle involved.

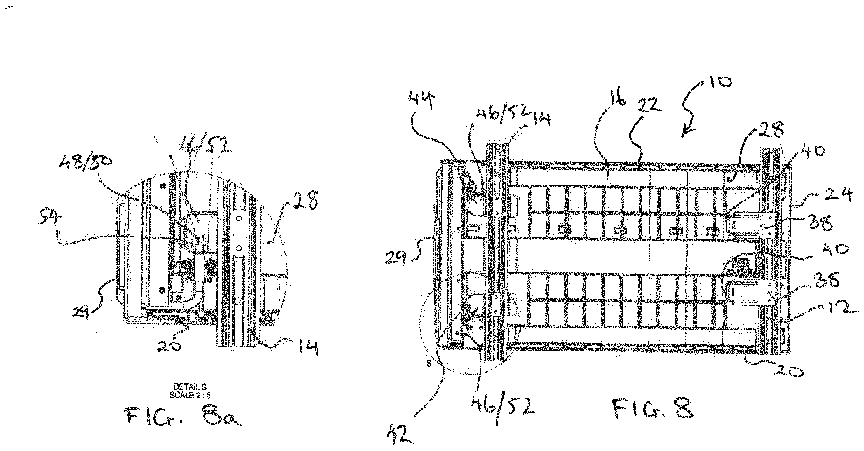

The storage system 10 includes a storage frame 16 defining a storage space 18 for storing items therein. The applicant also refers to the frame 16 as a "carcass". The illustrated storage frame 16 includes a bottom wall 28 (see, for example, Fig. 8), opposing side walls 20, 22, a rear wall 24, and a top wall 26, which collectively define a storage space 18. Access to the storage space 18 is via a front opening 30. It can be seen that a drawer 29 is fitted within the storage space 18 through the opening 30. A drawer handle 32 is provided to facilitate opening and closing of the drawer 29.

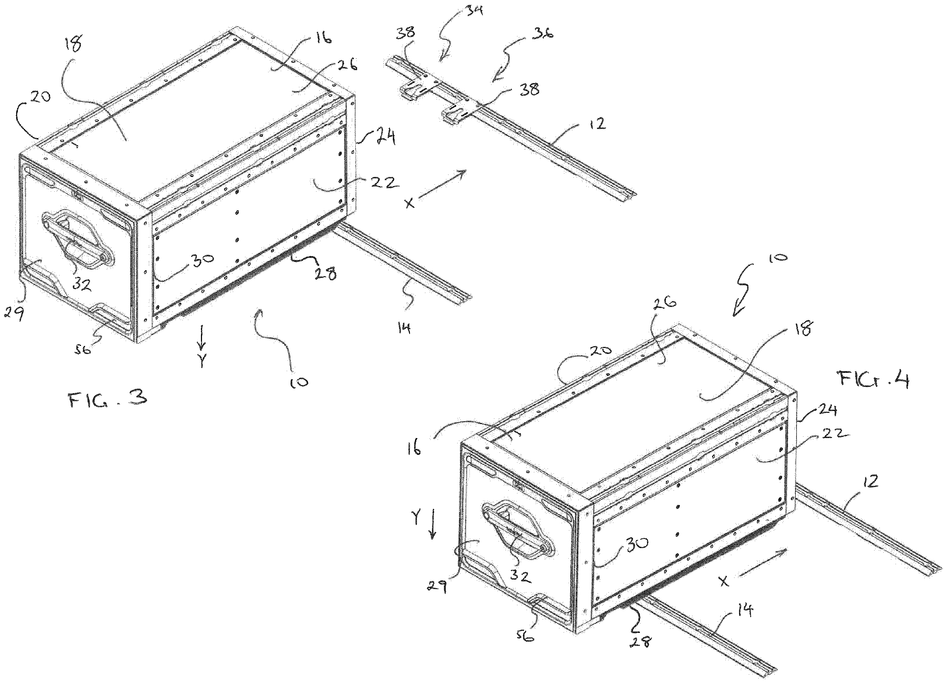

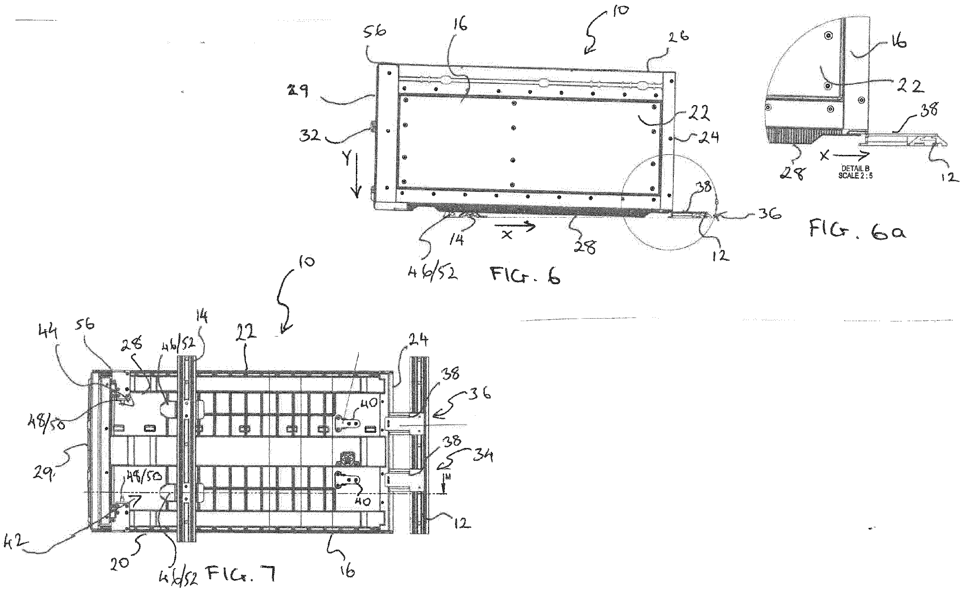

Referring, especially, to Figures 6 to 9a, a pair of first connectors 34, 36 is provided for connecting the storage frame 16 to the first rail 12. Each first connector 34, 36 includes a first connector rail part 38 provided on the first rail 12, and a first connector frame part 40 provided on the underside of the storage frame 16. Each first connector frame part 40 is slidably receivable within its respective the first connector rail part 38. In the typical orientation shown in Figs. 1 to 6, each first connector frame part 40 is received in its respective first connector rail part 38 in a generally horizontal direction X. Figures 3 to 6 illustrated sequentially horizontal movement of the storage frame 16 relative to the stationary rails 12, 14 to engage the first connectors 34, 36. The rails 12, 14 would remain stationary during fitment of the storage frame 16, since they would be secured in position to or on the cargo space floor by the rail mounts earlier during the installation process.

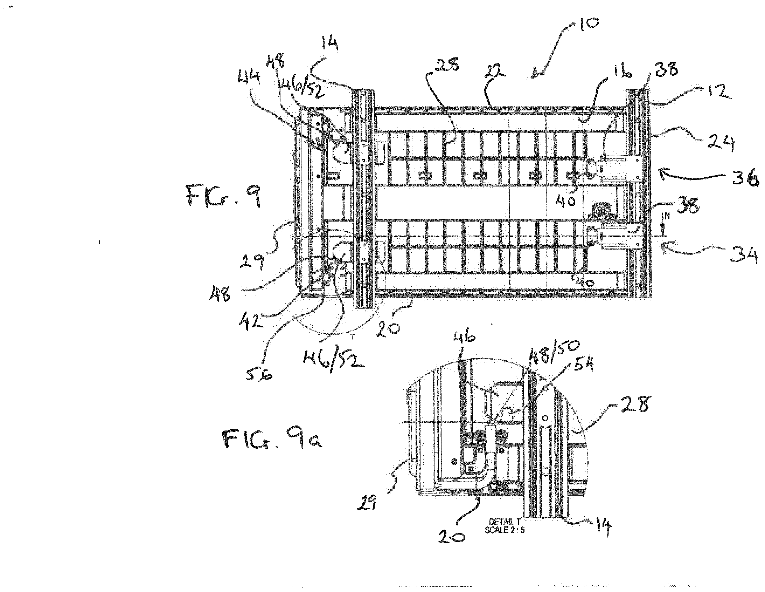

Again, referring to Figures 6 to 9a, a pair of second connectors 42, 44 is provided for connecting the storage frame 16 to the second rail 14. Each second connector 42, 44 includes a second connector rail part 46 provided on the second rail 14, and a second connector frame part 48 provided on the underside of the storage frame 16. Each second connector rail part 46 of the illustrated embodiment includes a spring-loaded pin 50 (see Figs. 8a and 9a), which is biased into a lateral, engagement position. Each second connector frame part 48 includes a striker plate 52 (again, refer to Figs. 8a and 9a). During installation, the tailgate end of the storage frame 16 is moved in a generally downwards direction Y such that a biasing surface (not clearly shown) of each striker plate 52 contacts it's respective spring loaded pin 50, forcing the pin 50 in a lateral direction until such time as further movement of the frame 16 causes the pins 50 to engage with a suitably located receiving aperture 54 (see Figures 8a and 9a) provided in the striker plate 52. Once each pin 50 is received in its respective receiving aperture 54, the frame 16 is secured in position to the second rail 14 (as well as to the first rail 12).

Fig. 9a illustrates the position of one of the pins 50 relative to its respective striker plate 52 shortly prior to the pin 50 being received in the receiving aperture 54 in the striker plate 52; while Fig. 8a shows the same pin 50 relative to the striker plate 52 once the pin 50 has been received in the striker plate aperture 54.

The spring biased pins 50 provide a simple and effective way of avoiding inadvertent disengagement of the storage frame 16 from the second rail 14 (and first rail 12) during use.

The illustrated form of the striker plates 52 and pins 50, may vary if desired. Also, it is to be appreciated that striker plates/pins may be provided for quick release of the frame 16 from the first rail 12, if desired.

The provision of slidably receivable configurations for the first connectors 34, 36 is considered by the applicant to be unique. Likewise, the provision of a pin latch, catch or locking pin engagement of the second connectors 42, 44 is considered by the applicant to be unique. With these arrangements, once the rails 12, 14 are mounted in a desired position within the vehicle cargo space, the storage frame 16 can be relatively quickly and simply lifted and/or slid, and then secured in position to the rails 12, 14. The applicant's invention obviates additional the steps required when installing existing vehicle cargo space storage systems - of having to first place the storage frame into a desired position on the cargo space floor, and then having to manually connect the storage frame in position using screw threaded (or other) fasteners, which can be difficult to do in a confined space. Instead, a significant benefit of the applicant's invention is that the storage frame 16 is secured in position on or to the rails 12, 14 simply by placing the storage frame 16 in the correct position on the rails 12, 14 for the first and second connectors 34, 36, 42, 44 to secure the storage frame 16 to the rails 12, 14.

Another aspect of the present invention considered unique by the applicant is the provision of the first and second rails 12, 14, and the use of mounts to mount the rails 12, 14 into their desired positions within the cargo space. The rails 12, 14 can be utilized with a potentially wide variety of mounts and mounting locations. This allows for the storage system to be installed in a wide variety of applications, particularly (but not limited to) on the rear tray of 4WDs, SUVs, and other recreation, commercial and freight vehicles. Moreover, the applicant's system allows for the mounts to be mounted to the rails at any one of a range of different rail positions, thereby catering for differing size and dimension requirements of different model vehicles. It also provides the potential for mounting the mounts to existing vehicle mounting points, thereby avoiding the need to drill new mounting points or otherwise modify the vehicle to install the storage system. That said, it is to be appreciated that the invention may be installed utilizing the existing mounting points in the vehicle; or may be installed using newly drilled mounting points, as desired or required.

The mounts can be sold separately to the frame 16, rails 12, 14 and any associated other components such as drawers. In this regard, the mounts may be sold as installation kits for use with specific vehicles (or other applications), such that a vehicle owner could purchase a mount installation kit specifically designed for their model vehicle. If updating their vehicle, the vehicle owner may simply need to purchase a new installation kit; and could then transfer the remainder of the storage system 10 over from their existing vehicle for use with the new installation kit. A new installation kit may not even be required if there exists compatibility between the mounting point positions of the existing and new vehicles.

In the illustrated embodiment, each first connector frame part 40 is slidably receivable in its respective first connector rail part 38. To do so, the storage frame 16 (with first connector frame part 40 attached) is moved in the at least generally horizontal direction X within the cargo space from the rear end of the vehicle towards the front end of the vehicle, until such time as the first connector frame part 40 engages with its respective connector rail part 38.

With the first connectors 34, 36 engaged, it is then a relatively simple process to engage the second connectors 42, 44. All that is required (once each second connector frame part 48 is aligned just above (or in front of) its respective second connector rail part 46) is to lower (in direction Y) the front end 56 of the frame 16 (which is located at the rear or tailgate end of the cargo space) a short distance (of, say, 1 cm) into position until each second connector frame part 48 is engaged with its respective second connector rail part 46; whereupon installation of the frame 16 is completed.

Thus, it is to be appreciated that the frame 16 is first moved in a generally horizontal direction to connect the frame 16 to the first rail 12; and then the front end 56 of the frame is lowered or slid a small distance to connect the frame 16 to the second rail 14.

It is to be appreciated that each of the first and second connectors 34, 36, 42, 44 is a releasable connector, thereby allowing for removal of the storage frame 16 from the rails 12, 14 if, and when, required. Similarly, each of the mounts of the illustrated embodiment is releasably mounted to its respective rail 12, 14, thereby desirably allowing for adjustment or removal of the mounts from the rails 12, 14 as required. The mounts, too, are releasably mounted in position to the vehicle, such that they can the adjusted or removed as and when required.

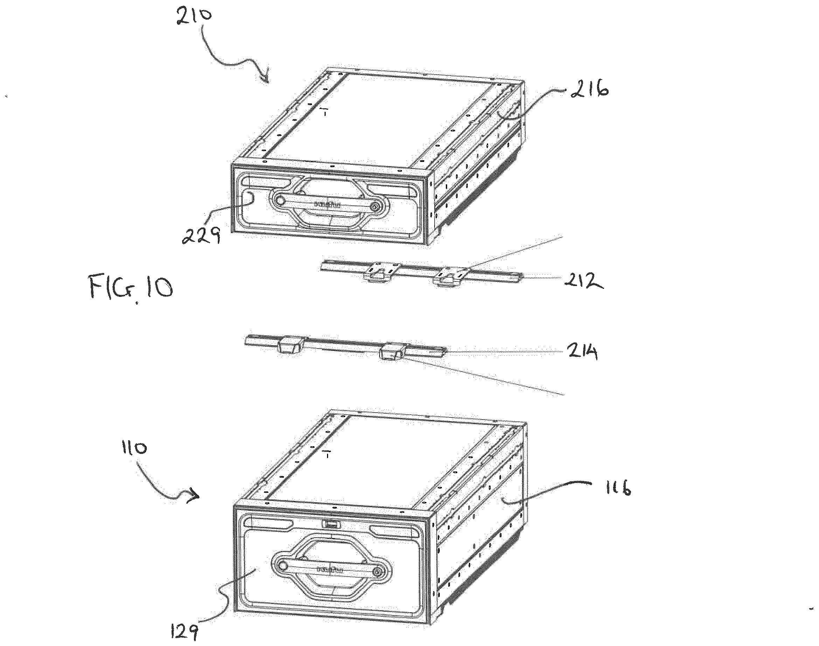

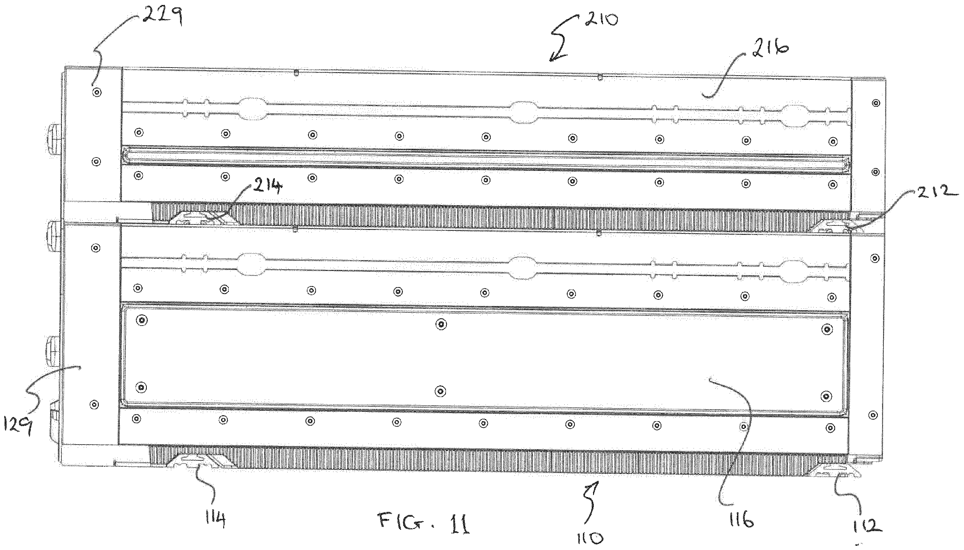

Referring to Figures 10 and 11, a pair of storage systems 110 and 210 according to another embodiment of the present invention is shown. The first and second rails 112, 114 of storage system 110 have been omitted from Figure 10 but are shown in Figure 11. A unique aspect of the arrangement shown in Figures 10 and 11 is that the rails 212, 214 of the storage system 210 are mounted in position to the top wall of storage frame 116. In this way, the storage frames 116 and 216 can be provided in a secure, stacked arrangement within a vehicle cargo space. A respective drawer 129, 229 is fitted to each storage system 110, 210. In the illustrated embodiment, the depth and width of storage frames 116 and 216 are identical, although frame 116 has a greater height than frame 216.

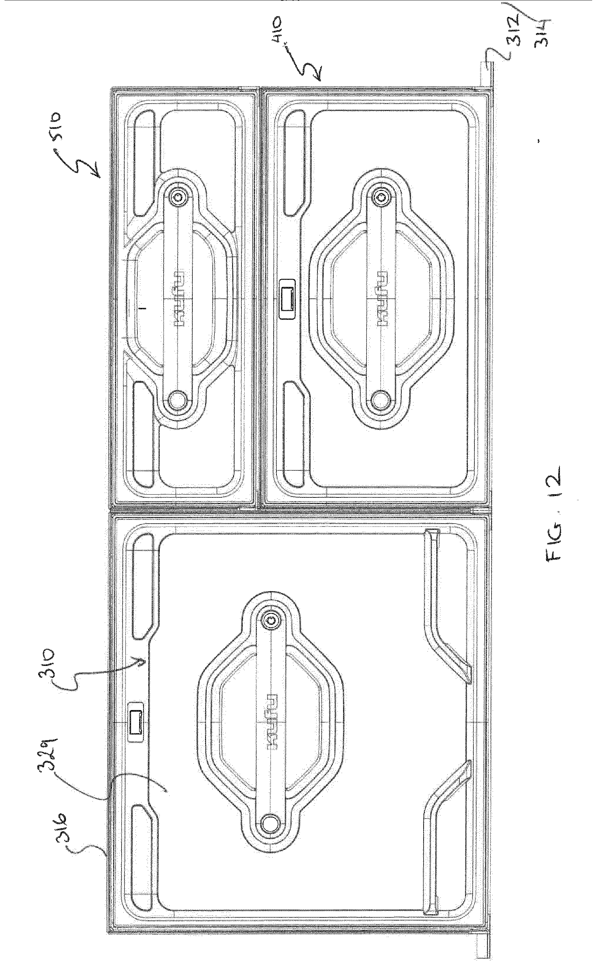

Referring to Figure 12, three storage systems 310, 410 and 510 according to another embodiment of the present invention are shown. Storage systems 310 and 410 are mounted side-by-side and share a common pair of rails 312, 314, while storage system 510 is mounted on top of storage system 410 in a similar manner to storage system 210 being mounted on top of storage system 110 shown in Figures 10 and 11.

It is to be appreciated that one or more of the storage systems 310, 410, 510 may be replaced with an alternative type of arrangement. For example, frame 316 and associated drawer 329 of storage system 310 may be replaced with one having a storage container with an upwardly facing opening, and perhaps a lid. As another example, a portable refrigerator may be mounted to the rails 312, 314 in place of the frame 316 and associated drawer 329.

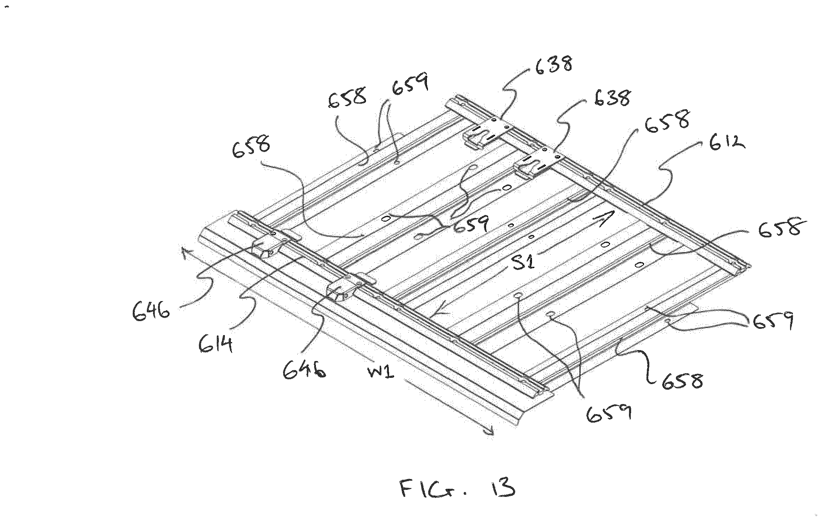

Figure 13 is an isometric view of rails 612, 614 fitted into a desired position extending in a generally parallel orientation across a vehicle cargo space floor. The mounts for mounting the rails 612, 614 in position aren't shown in Figure 13. A pair of first connector rail parts 638 is shown connected to the first rail 612; and a pair of second connector rail parts 646 is shown connected to the second rail. Mounts for mounting the rails 612, 614 in position within the cargo space are, in this embodiment, provided in the form of cross-members 658 mounted between the rails 612, 614. The cross-members 658 include a plurality of mounting points 659 for receiving bolts or screws there though for mounting the cross members 658 (and therefore, also the rails 612, 614) in position within the cargo space to the floor. A protector strip is provided below the rail 614, which, in use, extends across the cargo space rear opening of the vehicle. A protector strip is shown extending rearwardly (ie. towards the rear opening) from beneath the rail 614. This is intended to provide some protection for the cargo space floor adjacent the rear opening, especially when loading and unloading cargo.

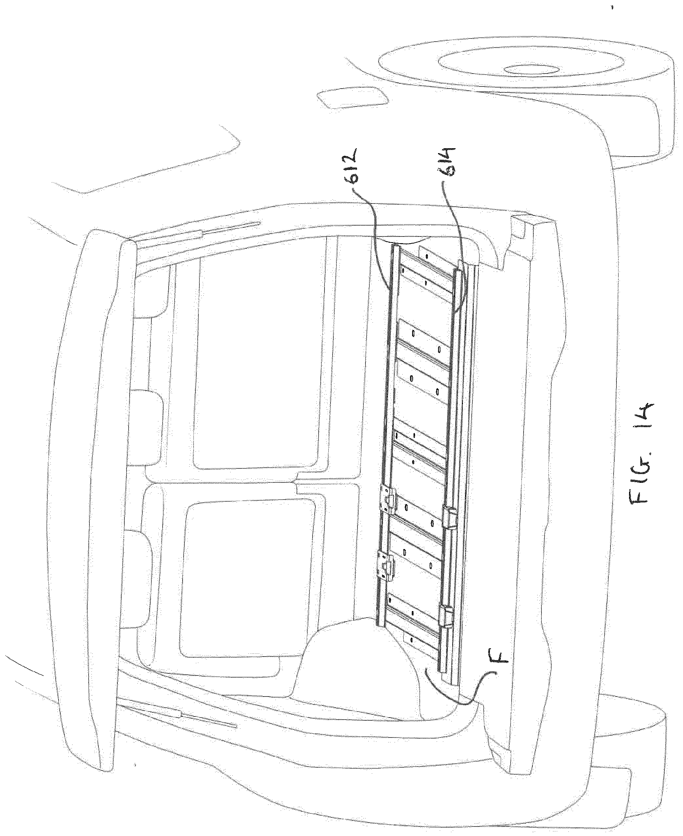

Figure 14 shows the rail and mount arrangement of Figure 13, but when seated on the floor F of a vehicle cargo space.

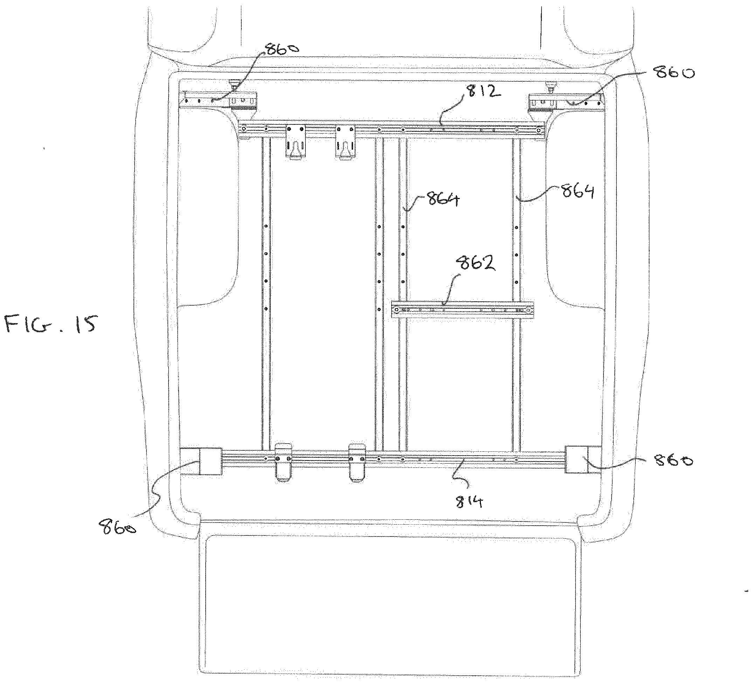

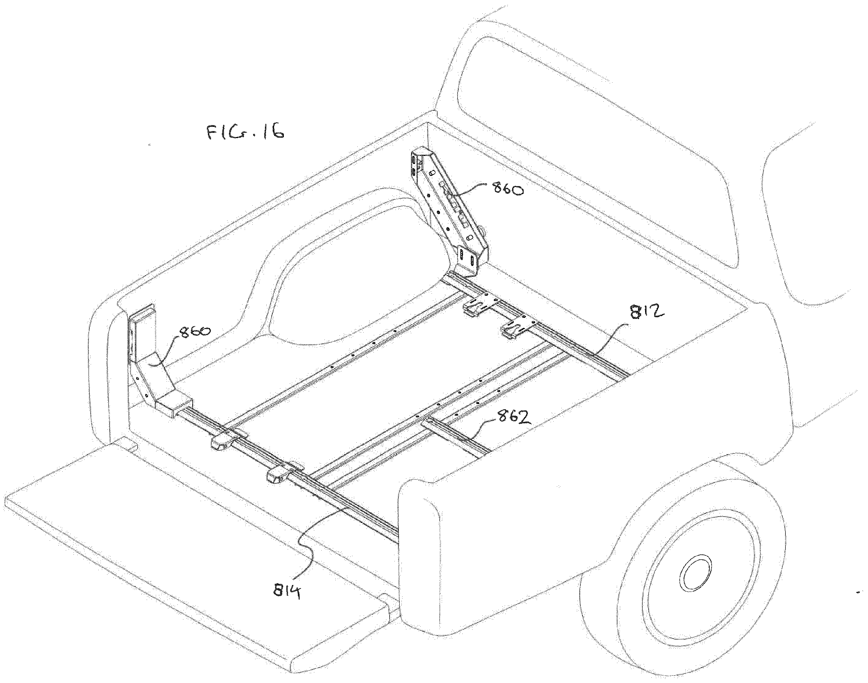

Figures 15 and 16 show a yet further rail and mount arrangement according to another embodiment of the present invention. In this embodiment, the rails 812, 814 are secured in position in the rear tray of a ute or 4WD by mounts 860. The rails 812, 814 are set relatively far apart, and are provided for receiving a first storage frame (not shown) or other storage arrangement (such as a refrigerator). It can be seen that a third rail 862 is provided, such that an additional storage frame (not shown) or other storage device of a differing depth can also be received. The storage frame and additional storage frame would be mounted to a common second rail 814, but would have separate first rails 812, 862. Rail 862 is mounted in position to cross-members 864 which are, in turn mounted between rails 812, 814.

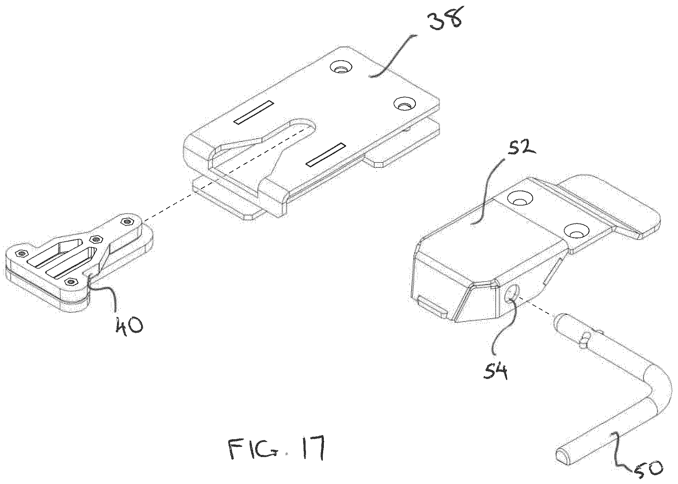

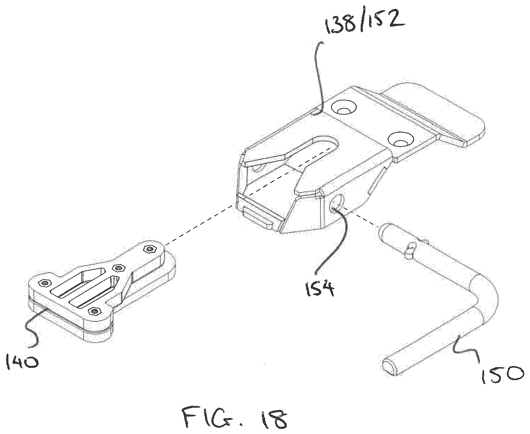

Figure 18 shows an alternative connector type that may be used in place of the first and/or second connectors 34, 36, 42, 44 (see Figures 3, 7 and 9). It can be seen that the alternative connector type includes a first connector frame part 140 that is substantially identical to first connector frame part 40 shown in Figure 17. However, the first connector rail part 38 and the striker plate 52 shown in Figure 17 have been integrated into a combined first connector rail part/striker plate 138/152 in Figure 18. The combined first connector rail part/ striker plate 138/152 may be used in place of one or both of the first connector rail part 38 and striker plate 52 shown in Figure 17. Both embodiments illustrated in Figures 17 and 18 include a spring-loaded pin 50/150 for receiving in a respective aperture 54/154.

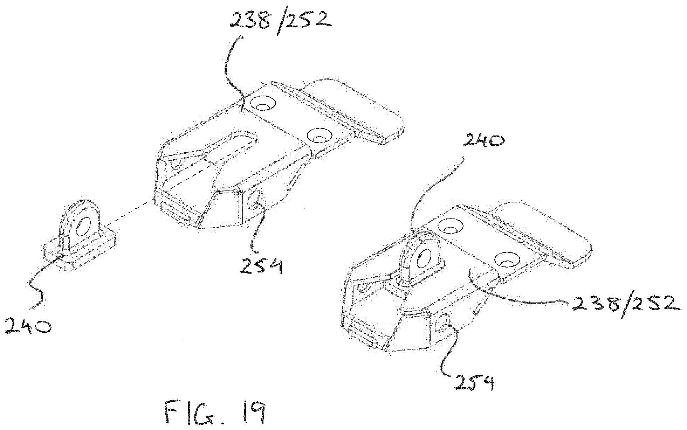

A further benefit of the rails of the present invention is that they may be used as a tie down system. As such, they may be used in conjunction with strap tie downs. In this regard, and as shown in Figure 19, a first connector frame part 240 may be slidably (or otherwise) received in a combination first connector rail part 238/striker plate 252.

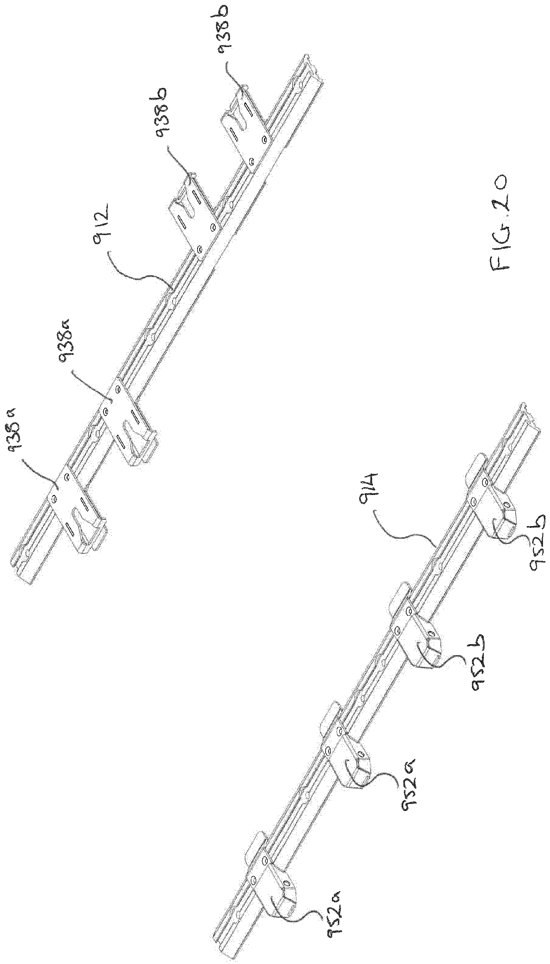

Figure 20 shows a pair of rails 912, 914 having a parallel orientation. To the rail 914 is mounted a pair of striker plates 952a, and to rail 912 is mounted a pair of first connector rail parts 938a. Striker plates 952a and first connector rail parts 938a are configured for receiving drawers or accessories. Also shown is an alternative arrangement of a pair of striker plates 952b, and a backwards facing pair of first connector rail parts 938b, which may be useful for receiving other accessories having different mounting requirements.

Although forms of the invention have been described herein, it will be obvious to those skilled in the art that variations may be made in the construction and relation of parts and method without departing from scope of the invention described herein

The extent of the protection conferred by the invention shall be determined by the appended claims. Nevertheless, the description and drawings shall be used to interpret the claims.

A reference herein to a patent document or any other matter identified as prior art is not to be taken as an admission that the document or other matter was known or that the information it contains was part of the common general knowledge as at the priority date of any of the claims.

## Claims

1. A storage system (10) including:
a pair of rails, including a first rail (12) and a second rail (14);
rail mounts for mounting the first and second rails (12, 14) in an at least generally parallel orientation in position on or to a supporting surface;
a storage frame (16) defining a storage space (18) for storing items therein;
a first connector (34,36) for connecting the storage frame (16) to the first rail (12); and
a second connector (42, 44) for connecting the storage frame (16) to the second rail (14);
the first connector (34,36) includes a first connector rail part (38) and a first connector frame part (40), with the first connector rail part (38) provided on the first rail (12); and the first connector frame part (40) provided on the storage frame (16), with one of the first connector rail part (38) and the first connector frame part (40) slidably receivable in the other of the first connector rail part (38) and the first connector frame part (40), **characterised in that**:
one of the first connector rail part (38) and first connector frame part (40) is slidably receivable in the other of the first connector rail part (38) and first connector frame part (40) in a first installation direction, with the first installation direction being at least generally transverse to the orientation of the first and second rails (12, 14), and
one of the second connector rail part (46) and second connector frame part (48) is receivable in the other of the second connector rail part (46) and second connector frame part (48) in a second installation direction, with the second installation direction being at least generally transverse to the orientation of the first and second rails (12, 14), the first installation direction being generally transverse to the second installation direction.

2. A storage system according to claim 1, the second connector (42, 44) including a second connector rail part (46) and a second connector frame part (48); the second connector rail part (46) provided on the second rail (14) and the second connector frame part (48) provided on the storage frame (16), with one of the second connector rail part (46) and second connector frame part (48) receivable by the other of the second connector rail part (46) and second connector frame part (48) in a pin latch, catch or locking pin engagement (50), the storage system (10) preferably including a pair of first connectors (34, 36) and a pair of second connectors (42, 44).

3. A storage system according to any one of the preceding claims, **characterised in that** each of the first and second connectors (34), (36), (42), (44) is a releasable connector

4. A storage system according to any one of the preceding claims, when for installation in or to a vehicle, and with the rail mounts for mounting the first and second rails (12), (14) to the vehicle, and preferably with the rail mounts for mounting the rails (12), (14) in the rear luggage compartment of a 4WD, SUV, recreation vehicle, commercial vehicle or freight vehicle.

5. A storage mounting system according to any one of the preceding claims, **characterized in that** each mount is for mounting to a respective first or second rail (12), (14) at any one of a plurality of potential mounting points along the respective rail (12), (14).

6. A storage system according to any one of the preceding claims, **characterized in that** the rail mounts (12), (14) are secured to the supporting surface by screw-threaded fasteners.

7. A storage system according to any one of the preceding claims, the storage frame (16) including, at least, a bottom wall (28), and preferably the storage frame further including opposing side walls (20), (22), a rear wall (24), and a front or top opening (30), which collectively define the storage space (18).

8. A storage system according to any one of the preceding claims, including a second storage frame (116) for mounting to each of the first and second rails (12), (14).

9. A storage system according to any one of claims 1 to 3, **characterized in that** the rail mounts are configured to mount the rails (12), (14) to a top wall (26) of a storage frame (116) of an adjacent storage mounting system (110).

10. A storage system according to any one of the preceding claims, **characterized in that** the storage system (10) is provided on an at least generally vertical, at least generally horizontal or sloping supporting surface.

11. A vehicle including a storage system according to any one of the preceding claims, with the storage system (10) mounted in or to the vehicle, and preferably with the mounts mounted to the vehicle by mounting fasteners, and further preferably with the mounts mounting each of the first and second rails (12), (14) in or to the vehicle such that the first and second rails (12), (14) extend in an at least generally transverse direction across the vehicle.

12. A method of installing a storage system according to any one of claims 1 to 10, including the steps of:
mounting the mounts in position on a supporting surface;
securing the first and second rails (12), (14) to the mounts;
then moving the storage frame (16) in a first installation direction relative to the first and second rails (12), (14) such that the first connector rail part (38) or the first connector frame part (40) is slidably received in the other of the first connector rail part (38) and the first connector frame part (40), and preferably followed by the step of moving the storage frame (16) relative to the first and second rails (12), (14) in a second installation direction, such that one of the second connector rail part (46) and the second connector frame part (48) is received by the other of the second connector rail part (46) and the second connector frame part (48) in a pin latch, catch or locking pin engagement (50).

## Patentansprüche

1. Aufbewahrungssystem (10), einschließlich:
eines Paars Schienen, einschließlich einer ersten Schiene (12) und einer zweiten Schiene (14);
Schienenhalterungen zum Befestigen der ersten und zweiten Schiene (12, 14) in einer mindestens im Allgemeinen parallelen Ausrichtung in Position auf oder an einer Stützfläche;
eines Aufbewahrungsrahmens (16), der einen Aufbewahrungsraum (18) zum Aufbewahren von Gegenständen darin definiert;
eines ersten Verbindungsstücks (34, 36) zum Verbinden des Aufbewahrungsrahmens (16) an der ersten Schiene (12), und
eines zweiten Verbindungsstücks (42, 44) zum Verbinden des Aufbewahrungsrahmens (16) an der zweiten Schiene (14);
wobei das erste Verbindungsstück (34, 36) einen ersten Verbindungsstückschienenteil (38) und einen ersten Verbindungsstückrahmenteil (40) beinhaltet, wobei der erste Verbindungsstückschienenteil (38) an der ersten Schiene (12) bereitgestellt ist, und der erste Verbindungsstückrahmenteil (40) an dem Aufbewahrungsrahmen (16) bereitgestellt ist, wobei einer aus dem ersten Verbindungsstückschienenteil (38) und dem ersten Verbindungsstückrahmenteil (40) gleitend in dem anderen aus dem ersten Verbindungsstückschienenteil (38) und dem ersten Verbindungsstückrahmenteil (40) aufgenommen werden kann, **dadurch gekennzeichnet, dass**:
einer aus dem ersten Verbindungsstückschienenteil (38) und dem ersten Verbindungsstückrahmenteil (40) gleitend in dem anderen aus dem ersten Verbindungsstückschienenteil (38) und dem ersten Verbindungsstückrahmenteil (40) in einer ersten Installationsrichtung aufgenommen werden kann, wobei die Installationsrichtung mindestens im Allgemeinen quer zu der Ausrichtung der ersten und zweiten Schiene (12, 14) ist, und
einer aus dem zweiten Verbindungsstückschienenteil (46) und zweiten Verbindungsstückrahmenteil (48) in dem anderen aus dem zweiten Verbindungsstückschienenteil (46) und zweiten Verbindungsstückrahmenteil (48) in einer zweiten Installationsrichtung aufgenommen werden kann, wobei die zweite Installationsrichtung mindestens im Allgemeinen quer zu der Ausrichtung der ersten und zweiten Schiene (12, 14) ist, wobei die erste Installationsrichtung im Allgemeinen quer zu der zweiten Installationsrichtung ist.

2. Aufbewahrungssystem nach Anspruch 1, wobei das zweite Verbindungstück (42, 44) einen zweiten Verbindungsstückschienenteil (46) und einen zweiten Verbindungsstückrahmenteil (48) beinhaltet, wobei der zweite Verbindungsstückschienenteil (46) an der zweiten Schiene (14) bereitgestellt ist und der zweite Verbindungsstückrahmenteil (48) an dem ersten Aufbewahrungsrahmen (16) bereitgestellt ist, wobei einer aus dem zweiten Verbindungsstückschienenteil (46) und dem zweiten Verbindungsstückrahmenteil (48) durch den anderen aus dem zweiten Verbindungsstückschienenteil (46) und dem zweiten Verbindungsstückrahmenteil (48) in einem Stiftarretierungs-, Einrast- oder Verriegelungsstift-Eingriff (50) aufgenommen werden kann, wobei das Aufbewahrungssystem (10) bevorzugt ein Paar aus ersten Verbindungsstücken (34, 36) und ein Paar aus zweiten Verbindungsstücken (42, 44) beinhaltet.

3. Aufbewahrungssystem nach einem der vorhergehenden Ansprüche, **dadurch gekennzeichnet, dass** jedes aus dem ersten und zweiten Verbindungsstück (34), (36), (42), (44) ein lösbares Verbindungsstück ist.

4. Aufbewahrungssystem nach einem der vorhergehenden Ansprüche, wenn zur Installation in oder an einem Fahrzeug, und mit den Schienenhalterungen zum Befestigen der ersten und zweiten Schiene (12), (14) an dem Fahrzeug, und bevorzugt mit den Schienenhalterungen zum Befestigen der Schienen (12), (14) im hinteren Gepäckraum eines Fahrzeugs mit Allradantrieb, eines SUVs, eines Wohnmobils, eines Nutzfahrzeugs oder eines Lastfahrzeugs.

5. Aufbewahrungsbefestigungssystem nach einem der vorhergehenden Ansprüche, **dadurch gekennzeichnet, dass** jede Halterung zum Befestigen an einer jeweiligen ersten oder zweiten Schiene (12), (14) an jeglichem aus einer Vielzahl von möglichen Montagepunkten entlang der jeweiligen Schiene (12), (14) dient.

6. Aufbewahrungssystem nach einem der vorhergehenden Ansprüche, **dadurch gekennzeichnet, dass** die Schienenhalterungen (12), (14) an der Stützfläche durch mit Schraubgewinde versehene Befestigungselemente gesichert sind.

7. Aufbewahrungssystem nach einem der vorhergehenden Ansprüche, wobei der Aufbewahrungsrahmen (16) mindestens eine Bodenwand (28) beinhaltet und bevorzugt der Aufbewahrungsrahmen ferner gegenüberliegende Seitenwände (20), (22), eine Rückwand (24) und eine vordere oder obere Öffnung (30) beinhaltet, die gemeinsam den Aufbewahrungsraum (18) definieren.

8. Aufbewahrungssystem nach einem der vorhergehenden Ansprüche, einschließlich eines zweiten Aufbewahrungsrahmens (116) zum Montieren an jeder aus der ersten und zweiten Schiene (12), (14).

9. Aufbewahrungssystem nach einem der Ansprüche 1 bis 3, **dadurch gekennzeichnet, dass** die Schienenhalterungen konfiguriert sind, um die Schienen (12), (14) an einer oberen Wand (26) eines Aufbewahrungsrahmens (116) eines benachbarten Aufbewahrungsbefestigungssystems (110) zu befestigen.

10. Aufbewahrungssystem nach einem der vorhergehenden Ansprüche, **dadurch gekennzeichnet, dass** das Aufbewahrungssystem (10) an einer mindestens im Allgemeinen vertikalen, mindestens im Allgemeinen horizontalen oder geneigten Stützfläche bereitgestellt ist.

11. Fahrzeug, einschließlich eines Aufbewahrungssystems nach einem der vorhergehenden Ansprüche, mit dem Aufbewahrungssystem (10) in oder an dem Fahrzeug befestigt, und bevorzugt mit den Halterungen an dem Fahrzeug durch Befestigungselemente befestigt, und wobei ferner bevorzugt die Halterungen jede aus der ersten und zweiten Schiene (12), (14) in oder an dem Fahrzeug befestigen, sodass sich die erste und zweite Schiene (12), (14) in eine mindestens im Allgemeinen quere Richtung über das Fahrzeug hinweg erstrecken.

12. Verfahren des Installierens eines Aufbewahrungssystems nach einem der Ansprüche 1 bis 10, einschließlich der folgenden Schritte:
Befestigen der Halterungen in Position auf einer Stützfläche;
Sichern der ersten und zweiten Schiene (12), (14) an den Halterungen;
dann Bewegen des Aufbewahrungsrahmens (16) in eine erste Installationsrichtung relativ zu der ersten und zweiten Schiene (12), (14), sodass der erste Verbindungsstückschienenteil (38) oder der erste Verbindungsstückrahmenteil (40) gleitend in dem anderen aus dem ersten Verbindungsstückschienenteil (38) und dem ersten Verbindungsstückrahmenteil (40) aufgenommen wird, und bevorzugt gefolgt von dem Schritt des Bewegens des Aufbewahrungsrahmens (16) relativ zu der ersten und zweiten Schiene (12), (14) in eine zweite Installationsrichtung, sodass einer aus dem zweiten Verbindungsstückschienenteil (46) und dem zweiten Verbindungsstückrahmenteil (48) durch den anderen aus dem zweiten Verbindungsstückschienenteil (46) und dem zweiten Verbindungsstückrahmenteil (48) in einem Stiftarretierungs-, Einrast- oder Verriegelungsstift-Eingriff (50) aufgenommen wird.

## Revendications

1. Système de rangement (10) comprenant :
une paire de rails, comprenant un premier rail (12) et un deuxième rail (14) ;
des montants de rail pour monter les premier et deuxième rails (12, 14) dans une orientation au moins généralement parallèle en position sur une surface de support ;
un bâti de rangement (16) définissant un espace de rangement (18) pour ranger des objets dans celui-ci ;
un premier raccord (34, 36) pour raccorder le bâti de rangement (16) au premier rail (12) ; et
un deuxième raccord (42, 44) pour raccorder le bâti de rangement (16) au deuxième rail (14) ;
le premier raccord (34, 36) comprend une partie de rail de premier raccord (38) et une partie de bâti de premier raccord (40), la partie de de rail de premier raccord (38) étant prévue sur le premier rail (12) ; et la partie de bâti de premier raccord (40) étant prévue sur le bâti de rangement (16), l'une de la partie de rail de premier raccord (38) et la partie de bâti de premier raccord (40) pouvant être reçue par coulissement dans l'autre de la partie de rail de premier raccord (38) et de la partie de bâti de premier raccord (40), **caractérisé en ce que** :
l'une de la partie de rail de premier raccord (38) et de la partie de bâti de premier raccord (40) peut être reçue par coulissement dans l'autre de la partie de rail de premier raccord (38) et de la partie de bâti de premier raccord (40) dans une première direction d'installation, la première direction d'installation étant au moins généralement transversale à l'orientation des premier et deuxième rails (12, 14), et
l'une de la partie de rail de deuxième raccord (46) et de la partie de bâti de deuxième raccord (48) peut être reçue dans l'autre partie de rail de deuxième raccord (46) et de la partie de bâti de deuxième raccord (48) dans une deuxième direction d'installation, la deuxième direction d'installation étant au moins généralement transversale à l'orientation des premier et deuxième rails (12, 14), la première direction d'installation étant généralement transversale à la deuxième direction d'installation.

2. Système de rangement selon la revendication 1, le deuxième raccord (42, 44) comprenant une partie de rail de deuxième raccord (46) et une partie de bâti de deuxième raccord (48) ; la partie de rail de deuxième raccord (46) étant prévue sur le deuxième rail (14) et la partie de bâti de deuxième raccord (48) étant prévue sur le bâti de rangement (16), l'une de la partie de rail de deuxième raccord (46) et de la partie de bâti de deuxième raccord (48) pouvant être reçue par l'autre de la partie de rail de deuxième raccord (46) et de la partie de bâti de deuxième raccord (48) dans une mise en prise par loquet, goupille d'accrochage ou de verrouillage (50), le système de rangement (10) comprenant de préférence une paire de premiers raccords (34, 36) et une paire de deuxièmes raccords (42, 44).

3. Système de rangement selon l'une quelconque des revendications précédentes, **caractérisé en ce que** chacun des premiers et deuxièmes raccords (34), (36), (42), (44) est un raccord libérable.

4. Système de rangement selon l'une quelconque des revendications précédentes, lorsqu'il est destiné à être installé dans ou sur un véhicule, et avec les montants de rail pour monter les premier et deuxième rails (12), (14) au véhicule, et de préférence avec les montants de rail pour monter les rails (12), (14) dans le compartiment à bagages arrière d'un 4x4, d'un SUV, d'un véhicule de loisir, d'un véhicule commercial ou d'un véhicule de transport de fret.

5. Système de montage de rangement selon l'une quelconque des revendications précédentes, **caractérisé en ce que** chaque montant est destiné à être monté sur un premier ou deuxième rail (12), (14) respectif au niveau de l'un quelconque d'une pluralité de points de montage potentiels le long du rail (12), (14) respectif.

6. Système de rangement selon l'une quelconque des revendications précédentes, **caractérisé en ce que** les montants de rail (12), (14) sont arrimés à la surface de support par des fixations à vis.

7. Système de rangement selon l'une quelconque des revendications précédentes, le bâti de rangement (16) comprenant, au moins, une paroi inférieure (28), et de préférence le bâti de rangement comprenant en outre des parois latérales opposées (20), (22), une paroi arrière (24), et une ouverture avant ou supérieure (30), qui définissent collectivement l'espace de rangement (18).

8. Système de rangement selon l'une quelconque des revendications précédentes, comprenant un deuxième bâti de rangement (116) destiné à être monté sur chacun des premier et deuxième rails (12), (14).

9. Système de rangement selon l'une quelconque des revendications 1 à 3, **caractérisé en ce que** les montants de rail sont configurés pour monter les rails (12), (14) sur une paroi supérieure (26) d'un bâti de rangement (116) d'un système de montage de rangement (110) adjacent.

10. Système de rangement selon l'une quelconque des revendications précédentes, **caractérisé en ce que** le système de rangement (10) est prévu sur une surface de support au moins généralement verticale, au moins généralement horizontale ou inclinée.

11. Véhicule comprenant un système de rangement selon l'une quelconque des revendications précédentes, le système de rangement (10) étant monté dans ou sur le véhicule, et de préférence les montants étant montés sur le véhicule par des fixations de montage, et en outre de préférence les montants montant chacun des premier et deuxième rails (12), (14) dans ou sur le véhicule de telle sorte que les premier et deuxième rails (12), (14) s'étendent dans une direction au moins généralement transversale en travers du véhicule.

12. Procédé d'installation d'un système de rangement selon l'une quelconque des revendications 1 à 10, comprenant les étapes consistant à :
monter les montants en position sur une surface de support ;
arrimer les premier et deuxième rails (12), (14) aux montants ;
puis déplacer le bâti de rangement (16) dans une première direction d'installation par rapport aux premier et deuxième rails (12), (14) de telle sorte que la partie de rail de premier raccord (38) ou la partie de bâti de premier raccord (40) est reçue par coulissement dans l'autre de la partie de rail de premier raccord (38) et de la partie de bâti de premier raccord (40), et de préférence suivies de l'étape consistant à déplacer le bâti de rangement (16) par rapport aux premier et deuxième rails (12), (14) dans une deuxième direction d'installation, de telle sorte que l'une de la partie de rail de deuxième raccord (46) et de la partie de bâti de deuxième raccord (48) est reçue par l'autre de la partie de rail de deuxième raccord (46) et la partie de bâti de deuxième raccord (48) dans une mise en prise par loquet, goupille d'accrochage ou de verrouillage (50).
